# EUROPEAN PATENT APPLICATION

(11) **EP 2 908 494 A1**
(43) Date of publication of application: **19.08.2015**
(21) Application number: 15153360.1
(22) Date of filing: 30.01.2015
(51) Int. Cl.: H04L 29/06, H04W 12/06, H04L 29/08, G08G 5/00

(54) **System and method for remote access to on-board aircraft systems**

(30) Priority: 12.02.2014 US 201461939073 P; 13.08.2014 US 201414459118
(71) Applicant: Honeywell International Inc., Morristown, NJ 07962-2245 (US)
(72) Inventor: Goldstein, David B., Morristown, NJ 07962-2245 (US); Lutz, David, Morristown, NJ 07962-2245 (US); Marshall, Kevin Robert, Morristown, NJ 07962-2245 (US); Bell, Douglas Allen, Morristown, NJ 07962-2245 (US)
(74) Representative: Houghton, Mark Phillip

(57) **Abstract**

A system and method for providing remote access to an on-board aircraft system provides establishing communication between an aircraft server that is located within the aircraft and a remote computer that is located outside of the aircraft. In the aircraft, a request is received to establish a remote session between the remote computer and the aircraft server. A passcode is generated in the aircraft, and is transmitted from a first communication device that is collocated with the aircraft to a second communication device that is collocated with the remote computer. The passcode is then transmitted from the remote computer to the aircraft server and, upon receipt of the passcode by the aircraft server, the remote computer is provided with remote access to the on-board aircraft system.

## Description

### CROSS-REFERENCE TO RELATED APPLICATION

This application claims the benefit of U.S. Provisional Patent Application No. 61//939,073, filed February 12, 2014, which is incorporated herein by reference.

### TECHNICAL FIELD

The present invention generally relates to aircraft maintenance, and more particularly relates to a system and method for remote access to on-board aircraft systems.

### BACKGROUND

At times, aircraft may exhibit certain problem indications or require repair or maintenance activity while on the ground at a location that does not have local, skilled maintenance personnel. This can result in the aircraft owner and/or operator having to ground the aircraft until skilled personnel can travel to the aircraft location. Alternatively, the aircraft owner and/or operator may have to have skilled maintenance personnel accompany the aircraft to its destination. These solutions can be time consuming, costly, or both.

Aircraft owners/operators would prefer to have limited access to various on-board aircraft systems, such as the aircraft Onboard Maintenance System (OMS), from a remote location. With limited remote access, skilled maintenance personnel could monitor and potentially initiate some tests from a remote location. Thus alleviating the need for special travel or accompaniment by maintenance personnel.

Hence, there is a need for aircraft owners/operators to have the ability to create a remote connection to the aircraft such that skilled maintenance personnel can have some level of visibility into the aircraft state. The present invention addresses at least this need.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.

In one embodiment, a method for providing remote access to an on-board aircraft system includes establishing communication between an aircraft server that is located within the aircraft and a remote computer that is located outside of the aircraft. A request is received, in the aircraft server, from the remote computer to establish a remote session between the remote computer and the aircraft server. A passcode is generated, in the aircraft, which, upon entry into and transmission by the remote computer, will establish the remote session. The passcode is transmitted from a first communication device that is collocated with the aircraft to a second communication device that is collocated with the remote computer. The passcode is transmitted from the remote computer to the aircraft server and, upon receipt of the passcode by the aircraft server, the remote computer is provided with remote access to the on-board aircraft system.

In another embodiment, a system for providing remote access to an aircraft on-board aircraft system that is disposed in an aircraft includes a remote computer and aircraft infrastructure. The remote computer is located outside of the aircraft and is configured to selectively transmit a request to establish a remote session with the on-board aircraft system and to selectively transmit a passcode. The aircraft infrastructure is disposed on the aircraft and is configured to (i) selectively establish communication with the remote computer, (ii) receive the request to establish the remote session, (iii) selectively generate the passcode, (iv) receive the passcode transmitted by the remote computer, and (iv) upon receipt thereof, provide the remote computer with remote access to the on-board aircraft maintenance system.

Furthermore, other desirable features and characteristics of the system and method described herein will become apparent from the subsequent detailed description and the appended claims, taken in conjunction with the accompanying drawings and the preceding background.

### BRIEF DESCRIPTION OF THE DRAWINGS

The present invention will hereinafter be described in conjunction with the following drawing figures, wherein like numerals denote like elements, and wherein:
FIG. 1 depicts a simplified top view of a portion of an aerodrome with aircraft parked at various gates an in wireless communication with various devices;
FIG. 2 depicts a functional block diagram of an embodiment of a system for providing remote access to an aircraft on-board maintenance system; and
FIG. 3 depicts one embodiment of a process, in flowchart form, that they system of FIG. 2 implements for providing remote access to the aircraft on-board maintenance system.

### DETAILED DESCRIPTION

The following detailed description is merely exemplary in nature and is not intended to limit the invention or the application and uses of the invention. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention which is defined by the claims. Furthermore, there is no intention to be bound by any expressed or implied theory presented in the preceding technical field, background, brief summary, or the following detailed description.

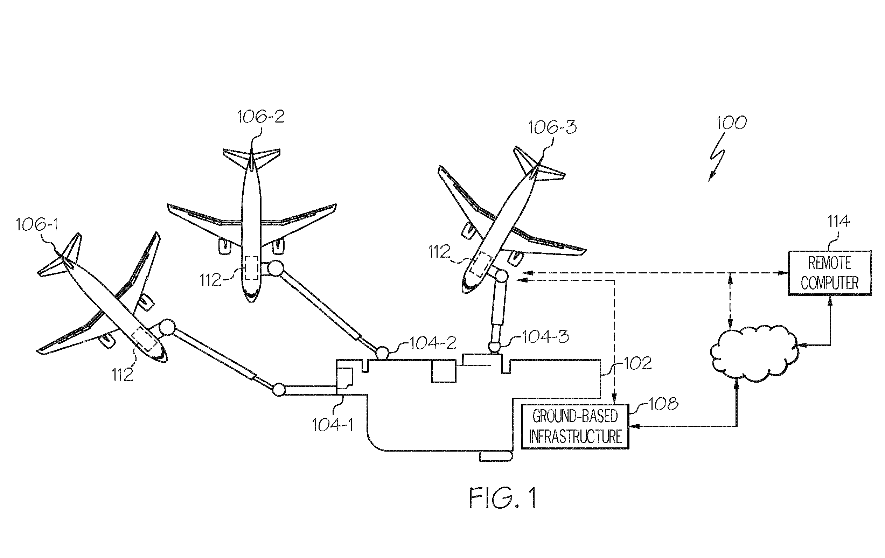

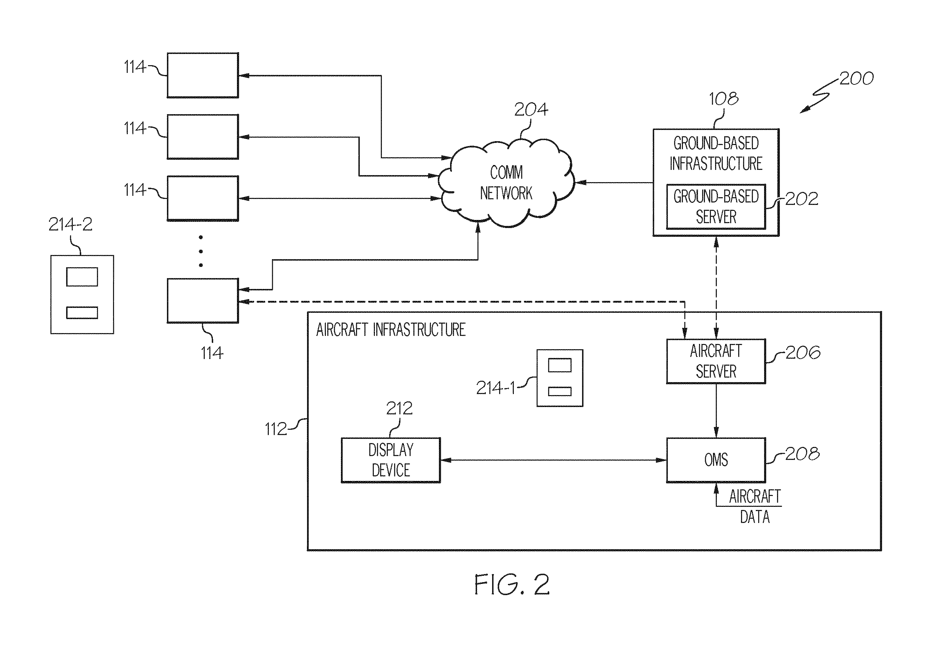

Referring to FIG. 1, a simplified top view of a portion of an aerodrome 100 is depicted. In the depicted embodiment, the aerodrome 100 includes a terminal building 102 having a plurality of gates 104 (104-1, 104-2, and 104-3). A different aircraft 106 (106-1, 106-2, 106-3) is parked at each of the gates 104. As FIG. 1 additionally depicts, the aerodrome 100 preferably includes suitable ground-based infrastructure 108, and each aircraft 106 includes suitable aircraft infrastructure 112. The ground-based infrastructure 108 and the aircraft infrastructure 112, together with one or more remote computers 114 (only one depicted in FIG. 1), form a system that provides remote access to an on-board aircraft maintenance system that is disposed each aircraft 106. With reference now to FIG. 2, the system will be described in more detail.

The depicted system 200, as noted above, includes the ground-based infrastructure 108, the one or more remote computers 114, and the aircraft infrastructure 112. The ground-based infrastructure 108 may be disposed wholly within the terminal building 102, wholly apart from the terminal building 102, or partially within and apart from the terminal building 102. The ground-based infrastructure 108 may also be variously configured and implemented, but in the depicted embodiment it includes at least a server, which is referred to herein as a ground-based server 202. The ground-based server 202, may be implemented using any one of numerous servers now known or developed in the future, is configured to selectively communicate with the aircraft infrastructure 112 and the one or more remote computers 114. Preferably, the ground-based server 202 is configured to selectively communicate with the aircraft infrastructure 112 via a wireless communication protocol, and may be in operable communication with the one or more remote computers 114 via a suitable communication network 204, such as the Internet, a cellular network, or a combination thereof.

Each of the remote computers 114 is located outside of the aircraft 106, and may be, in some embodiments, located remote from both the ground-based server 202 and the aircraft 106. Each remote computer 114 is configured to selectively transmit a request to establish a remote session with the aircraft infrastructure 112, and to selectively transmit a passcode to the aircraft infrastructure 112. The remote computers 114 may do so via direct communication with the aircraft infrastructure 112 (using a suitable wireless communication protocol) or via the ground-based server 202 and the communication network 204.

The aircraft infrastructure 112 is configured to selectively establish communication with the ground-based server 202 and/or one or more of the remote computers 114. The aircraft infrastructure 112 is additionally configured to receive requests to establish remote sessions with remote computers 114, to selectively generate passcodes, to receive passcodes transmitted by remote computers 114 and, upon receipt of the appropriate passcodes (i.e., passcodes matching the generated passcodes), to provide remote computers 114 with remote access to the on-board aircraft maintenance system 208. The aircraft infrastructure 112 may be variously implemented to carry out these functions, but in the depicted embodiment the aircraft infrastructure 112 includes at least an aircraft server 206, one or more on-board aircraft systems 208 (depicted using a single functional block), and one or more display devices 212 (only one depicted).

The aircraft server 206 is configured to selectively establish communication with the ground-based server 202 and/or one or more of the remote computers 114. As noted above, this communication is preferably via a wireless communication protocol. The aircraft server 206 additionally provides the connection status (or "heartbeat") to the ground-based server 202 and/or the remote computers 114. This connection status can be supplied to the remote computers 114, either directly or via the ground-based server 202, so that the remote computers 114 can display the various connections statuses to remote operators. The aircraft server 206 is preferably configured to initiate communication with, or have communication initiated by, only compatible systems or devices. As such, the aircraft server 206 is configured to initiate the communication with the ground-based server 202, or have communication initiated by one or more of the remote computers 114. The aircraft server 206 is additionally configured to prevent non-compatible external systems and devices (both computational and communication devices) from initiating communication therewith.

The aircraft server 206 may also be configured, at least in some embodiments, to determine the tail number of the aircraft 106 on which it is installed. This is because, at least in some embodiments, the tail number may be used as a username for an incoming request to establish a remote session. It will be appreciated that in other embodiments other information may be used as a username. The aircraft server 206 is additionally configured to receive the above-mentioned passcode. The aircraft server 206 uses the passcode to validate a request to establish a remote session, and confirms the validation with the on-board aircraft system(s) 208.

The aircraft server 206 may also be used to receive various types of data from and transmit various types of data to other non-depicted systems on and off the aircraft 106. Thus, the aircraft server 206 is also configured to control (e.g., re-task) these data transfers so that remote sessions may, as needed, take precedence over a data transfer. The aircraft server 206 is additionally configured to terminate a remote session upon receipt of a connection termination command from the ground-based server 202, the remote computer 114, or the on-board aircraft system(s) 208. The aircraft server 206 may also be configured to terminate a remote session after a predetermined time period (e.g., a connection timeout).

The on-board aircraft system(s) 208 may be any one of numerous (or all) avionics systems installed in an aircraft that supply various types of operational aircraft data to support maintenance operations on the aircraft 106. In addition to this known functionality, the depicted on-board aircraft system(s) 208 is configured to selectively generate the above-mentioned passcode. In particular, the on-board aircraft system(s) 208 will generate a passcode in response to a command. This command may be supplied from various sources, such as the aircraft server 206, or the display device 212. Regardless of the command source, the on-board aircraft system(s) 208, upon receipt of the command, will not only generate the passcode, but will provide it to both the aircraft server 206 and the display device 212. The aircraft server 206, as noted above, uses the passcode to validate a request, supplied from one of the remote computers 114, to establish a remote session and confirm the valid connection with the on-board aircraft system(s) 208. The display device 212 will render the passcode for viewing by personnel in the aircraft cockpit.

Before proceeding with additional description of the on-board aircraft system(s) 208, it is noted that the display device 212 may be variously configured, implemented, and disposed. Preferably, the display device 212 is disposed in the cockpit of the aircraft 106, and in one particular embodiment it is configured and implemented as a multifunction displays (MFD). It will be appreciated that the display device 212 may be disposed in other locations within the aircraft 106, and may be implemented using any one of numerous other display devices installed in an aircraft 106. For example, it may be implemented using a primary flight display (PFD), a display on an electronic flight bag (EFB), or a display on a stand-alone hand-held device, to name just a few. In other embodiments, it may be, or form part of, a device (e.g., laptop or other portable computing device) that is connected to the on-board aircraft system(s) 208 in the aircraft 106.

Returning to the on-board aircraft system(s) 208, it is noted that the system 200 is preferably configured to provide different types of remote sessions. In particular, the system 200 is configured to provide either a remote sharing session or a remote control session. These different types of sessions are requested via one of the remote computers 114, and allow the remote computers 114 different types of access. A remote sharing session allows a remote computer 114 to view various inputs supplied to, and various responses supplied from, various aircraft systems. A remote control session allows a remote computer 114 to supply a limited command set to the aircraft 106, and to view the response of the aircraft 106 to the commands. In this regard, the on-board aircraft system(s) 208 may additionally be configured to generate different types of passcodes to differentiate between the different types of remote sessions.

Though not considered part of the system 200, FIG. 2 additionally depicts a plurality of communication devices 214 (only two depicted). In particular, each remote session will preferably have associated therewith at least a first communication device 214-1 and a second communication device 214-2. The first communication device 214-1 is collocated with the aircraft 106 and is used to selectively transmit the passcode to the second communication device 214-2. The second communication device 214-2 is collocated with the remote computer 114 that is requesting the remote session, and is used to receive the passcode transmitted by the first communication device 214-1. It will be appreciated that the communication devices 214 may be variously configured and implemented, but are preferably both hand-held devices, such as a smart phone, a tablet computer, or a radio, just to name a few. Moreover, the communication devices 214 may be configured to allow transmission of the passcode via voice communication, via text message, or via email, to name just a couple of examples.

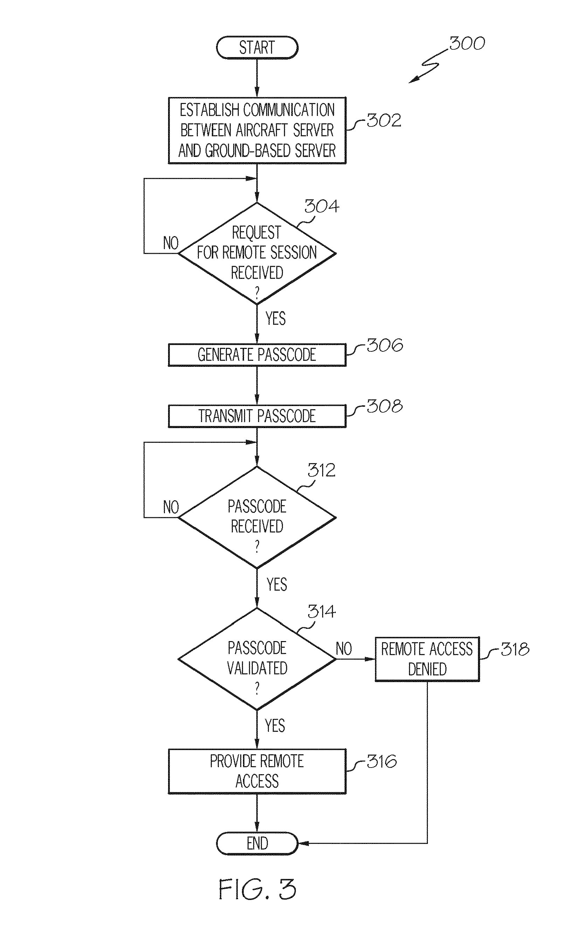

The system 200 described above implements a process for providing remote access to the on-board aircraft system(s) 208. For completeness, an embodiment of the process 300 is depicted in flowchart form in FIG. 3, and with reference thereto will now be described.

The process 300 is initiated when communication is established between an aircraft server 206 and a remote computer 114 or the ground-based server 202 (302). Upon establishment of this communication, the aircraft server 206 awaits a request that is transmitted from the remote computer 114 to establish a remote session (304). Upon receipt of the request, a passcode is generated (306). As noted above, the on-board aircraft system(s) 208 preferably generates the passcode, and supplies it for display on the display device 212.

The passcode that is generated (and displayed) is then transmitted from a first communication device 214-1 to a second communication device 214-2 (308). This transmission may be via a voice message (phone call), a text message, email, or any one of numerous other independent transmission techniques. Upon receipt of the passcode, the user of the remote computer 114 that is requesting the remote session enters the passcode, and transmits it from the remote computer 114 to the aircraft server 206 (312). The aircraft server 206, upon receipt of the passcode, validates the received passcode (314). To do so, for example, the aircraft server 206 compares the received passcode to the generated passcode, and may additionally check that the received passcode originated from the remote computer 114 that requested the remote session. If the received passcode is validated, the aircraft server 206 provides the remote computer 114 with remote access to the on-board aircraft system(s) 208 (316). If the received passcode is not validated, the aircraft server 206 denies access (318).

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a user terminal. In the alternative, the processor and the storage medium may reside as discrete components in a user terminal.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims.

## Claims

1. A method for providing remote access to an on-board aircraft system, comprising the steps of:
establishing communication between an aircraft server and a remote computer, the aircraft server located within the aircraft, the remote computer located outside of the aircraft;
receiving, in the aircraft server, a request from the remote computer to establish a remote session between the remote computer and the aircraft server;
generating, in the aircraft, a passcode that, upon entry into and transmission by the remote computer, will establish the remote session;
transmitting the passcode from a first communication device to second communication device, the first communication device collocated with the aircraft, the second communication device collocated with the remote computer;
transmitting the passcode from the remote computer to the aircraft server; and
upon receipt of the passcode by the aircraft server, providing the remote computer with remote access to the on-board aircraft system.

2. The method of claim 1, further comprising:
displaying the generated passcode on a display device installed in the aircraft.

3. The method of claim 2, wherein:
the aircraft comprises a cockpit; and
the display device is installed in the cockpit.

4. The method of claim 1, further comprising:
preventing computational devices and communication devices from initiating communication with the aircraft server.

5. The method of claim 1, wherein the step of establishing communication comprises:
establishing the communication between the aircraft server and the remote computer via a ground-based server and a communication network.

6. A system for providing remote access to an aircraft on-board aircraft system that is disposed in an aircraft, the system comprising:
a remote computer located outside of the aircraft and configured to (i) selectively transmit a request to establish a remote session with the on-board aircraft system and (ii) selectively transmit a passcode; and
aircraft infrastructure disposed on the aircraft and configured to (i) selectively establish communication with the remote computer, (ii) receive the request to establish the remote session, (iii) selectively generate the passcode, (iv) receive the passcode transmitted by the remote computer, and (iv) upon receipt thereof, provide the remote computer with remote access to the on-board aircraft maintenance system.

7. The system of claim 6, wherein the aircraft infrastructure comprises an aircraft server, a display device, and the on-board aircraft system.

8. The system of claim 7, wherein the on-board aircraft system is in operable communication with the display device and the aircraft server and is configured to (i) generate the passcode, (ii) command the display device to display the generated passcode, and (iii) supply the passcode to the aircraft server.

9. The system of claim 8, further comprising:
a first communication device collocated with the aircraft for selectively transmitting the passcode; and
a second communication device collocated with the remote computer for receiving the passcode transmitted by the first communication device.

10. The system of claim 6, further comprising:
a ground-based server in operable communication with a communication network,
wherein the remote computer selectively transmits the request via the communication network and the ground-based server,
wherein the aircraft server is configured to initiate the communication with the remote computer and prevent computational devices and communication devices from initiating communication therewith.
